# EUROPÄISCHE PATENTSCHRIFT

(11) **EP 2 690 039 B1**
(45) Veröffentlichungstag und Bekanntmachung des Hinweises auf die Patenterteilung: **01.06.2016**
(21) Anmeldenummer: 13174727.1
(22) Anmeldetag: 02.07.2013
(51) Int. Cl.: B65G 57/00, B65G 59/00

(54) **Palettier-, Stapel- und/oder Handhabungsvorrichtung und Verfahren zu deren Umbau**
Palletizer, stacking and/or handling device and method for their conversion
Dispositif de mise en palettes, d'empilement et/ou de manutention et son procédé de transformation

(30) Priorität: 26.07.2012 DE 102012213212
(43) Veröffentlichungstag der Anmeldung: 29.01.2014
(73) Patentinhaber: Krones Aktiengesellschaft, 93073 Neutraubling (DE)
(72) Erfinder: HAAS, Johann, 93073 Neutraubling (DE)
(74) Vertreter: Benninger, Johannes

(56) Entgegenhaltungen:
- EP-A1- 2 243 731
- EP-A2- 2 218 666
- CN-Y- 2 765 896
- FR-A1- 2 733 221
- US-A- 5 195 726
- US-A- 5 871 069
- US-A1- 2002 134 970

## Beschreibung

Die vorliegende Erfindung betrifft eine Palettier-, Stapel- und/oder Handhabungsvorrichtung mit den Merkmalen des unabhängigen Anspruchs 1. Die Erfindung betrifft weiterhin ein Verfahren zur Überführung einer solchen Palettier-, Stapel- und/oder Handhabungsvorrichtung zwischen einer Betriebslage und einer Transportlage mit den Merkmalen des unabhängigen Anspruchs 11.

Im Bereich der Getränkeherstellungs- bzw. Abfüll- und Verpackungstechnik werden Getränkebehälter zu Gebinden, bestehend aus mehreren zusammengefassten Getränkebehältern zusammengefasst und diese Gebinde im Anschluss zu palettierfähigen Gebindelagen zusammengestellt und lagenweise auf Paletten gestapelt. Hierfür durchlaufen die Behälter bzw. Gebinde verschiedene Förderstationen. Um diese ganzlagigen Gebindelagen zu stapeln bzw. zu palettieren, gibt es eine Vielzahl von Vorrichtungen, welche allgemein als Palettiervorrichtungen bekannt sind. Solche Palettiervorrichtungen bestehen meist aus einem Hubwerk und einer daran angeordneten Handhabungseinrichtung wie z.B. einer Beladestation, Beladegreifer, Beladeplatte, Jalousiekopf oder Ähnlichem. Bei herkömmlichen Palettiervorrichtungen bestehen die Hubwerke aus mindestens einer Hubwerksäule, welche durch eine rohr- oder schachtförmige Säule und daran an einer Seite angeordneten vertikalen Führungen gebildet sein kann. Innerhalb der rohr- oder schachtförmigen Säule bietet der Hohlraum ausreichend Platz für ein Gegengewicht, welches mittels eines Riemens und über eine angetriebene Umlenkrolle in Verbindung mit der an einer Seite des Hubwerks an dessen Führungen vertikal beweglich angebrachten Beladestation bzw. Handhabungseinrichtung steht. Das Gegengewicht ist dabei meist so ausgelegt, dass das Gewicht annähernd dem Gewicht der Beladestation bzw. der Handhabungseinrichtung inklusive dem Gewicht einer ganzen Gebindelage entspricht. Um diese Hubwerke bzw. Hubwerksäulen an einem Boden wie bspw. einem Betonboden einer Abfüll- und Verpackungshalle fest verankern zu können, kann zusätzlich eine mit der rohr- oder schachtförmigen Säule verschweißte oder verschraubte Bodenplatte vorgesehen sein, welche fest im Boden verdübelt bzw. verankert wird. Die Verankerung der Hubwerksäule am Boden findet dabei auf einem speziell dafür vorbereiteten Fundament statt. Zu diesem Zweck wird die Hubwerksäule normalerweise eingemessen und stabil verankert.

Die Hubwerksäule bzw. das Hubwerk weist zudem einen motorischen Antrieb auf, welcher dem Heben und Senken der Handhabungseinrichtung dient. Der motorische Antrieb ist an einem oberen Ende der am Boden verankerten Hubwerksäule angebracht. Er versetzt eine Umlenkrolle in Bewegung, über welche ein geeignetes Zugmittel wie ein Riemen, ein Zahnriemen o. dgl. geführt ist, der an einem Ende die Handhabungseinrichtung und an einem anderen Ende das Gegengewicht fixiert hat. Durch diese Bewegungen kann die Handhabungseinrichtung gesteuert, gehoben und abgesenkt werden. Um die an dem Hubwerk vertikal angebrachte Handhabungseinrichtung selbst noch mit Funktionen zu versehen, versteht es sich von selbst, dass hierfür notwendige elektrische oder pneumatische Leitungen vorhanden sein müssen. Diese Leitungen werden über eine an der Hubwerksäule angebrachte Kabelführung der Handhabungseinrichtung zugeführt. Eine solche Kabelführung kann bspw. durch eine an sich bekannte sog. Energiekette gebildet sein.

Ähnlich wie bei der soeben beschriebenen Palettiervorrichtung stellt es sich bspw. auch bei einem sogenannten Zwischenlageneinleger dar. Ein Zwischenlageneinleger wird dazu verwendet, um zwischen den einzelnen gestapelten Gebindelagen eine Zwischenlage einzulegen, der meist durch einen aus Karton bestehenden flachen Zuschnitt gebildet ist. Dies geschieht in abwechselnder Weise, so dass nach jeder Lage von Gebinden eine Zwischenlage aufgelegt werden kann. Dieser Zwischenlageneinleger ist vom Grundaufbau fast baugleich wie die zuvor beschriebene Palettiervorrichtung. Allerdings ist anstelle einer Beladeplatte oder Beladestation eine Art Arm angebracht, der an einem Ende geeignete Greifmittel zum Ergreifen von Zwischenlagen angeordnet hat. Wenn hier von baugleich die Rede ist, so bezieht sich dies auf das Grundgerüst, nicht jedoch die weiteren Konstruktionsdetails, welche natürlich auch in den Dimensionen voneinander abweichen können. Detailausführungen der Handhabungseinrichtung, des Palettierers oder des Zwischenlageneinlegers sind für die Erfindung nicht ausschlaggebend. Wesentlich für die Erfindung ist der Grundaufbau der Einrichtung selbst, welcher im Wesentlichen annähernd gleich ist. So weist also auch der Zwischenlageneinleger die gleichen Komponenten wie rohr- bzw. schachtförmige Säule, Führungen, Gegengewicht, angeschweißte bzw. angeschraubte Bodenplatte, motorischer Antrieb, Riemen oder Zahnriemen, Verbindungsleitungen (pneumatisch, elektrisch) und eine Handhabungseinrichtung auf. Beide Vorrichtungen weisen letztendlich den gleichen Nachteil auf, wobei dieser Nachteil der Einfachheit halber nachfolgend beispielhaft nur anhand einer Palettiervorrichtung erklärt wird.

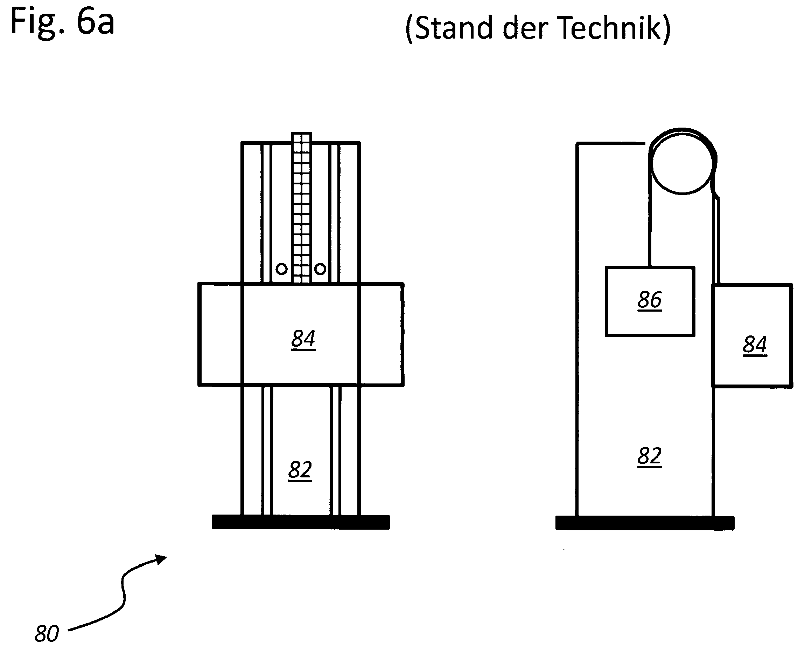

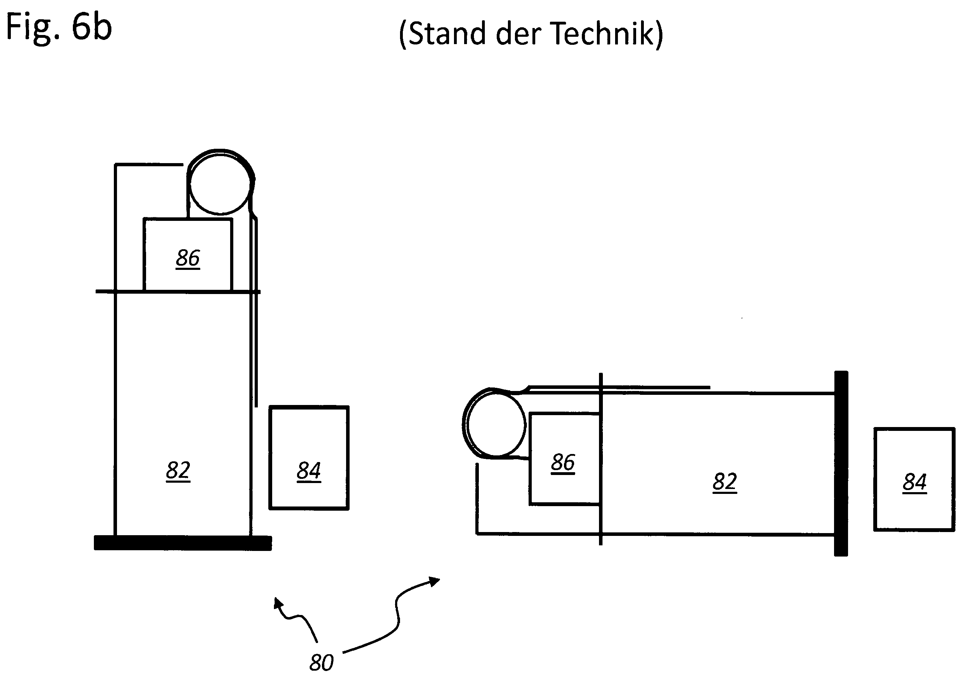

Für den Transport einer solchen Palettiervorrichtung ergibt sich aus folgenden Gründen ein erheblicher Nachteil, was schematisch anhand der Fig. 6a und 6b erläutert wird, die den bisher bekannten Stand der Technik beschreiben. Nach ihrer Herstellung und ihrem Funktionstest muss die Palettiervorrichtung 80 zu ihrem Einsatzort, in der Regel zum jeweiligen Kunden befördert werden. Dabei ist es bei dem derzeitigen Aufbau notwendig, diese Palettiervorrichtungen 80 zu zerlegen und in Einzelteilen oder in einzelnen Modulen zu ihrem Einsatzort zu transportieren, wo sie in zeitaufwändiger Arbeit wieder zusammengebaut und installiert werden müssen. Auf Grund der typischen Höhe der Hubwerkssäulen 82 von meist mehr als drei Metern muss diese also für den Transport umgelegt werden. Hierfür ist es allerdings notwendig, die Handhabungseinrichtung 84 vorher von der Hubwerkssäule 82 zu trennen und zu demontieren. Dabei wird die Handhabungseinrichtung in eine untere Position gebracht, was zwangsläufig das Gegengewicht 86 in eine obere Position im Hubwerksschacht bringt. Bevor nun die Handhabungseinrichtung 84 demontiert wird (vgl. Fig. 6b, links), muss das Gegengewicht 86 im Hubwerk gegen weitere vertikale Bewegungen gesichert werden. Hierfür weist die Hubwerkssäule 82 meist zwei horizontale Durchgangslöcher auf, durch welche zwei Rundstangen unterhalb und/oder oberhalb des Gegengewichts 86 hindurch geschoben werden und auf diese Weise die vertikale Beweglichkeit des Gegengewichts 86 begrenzen können. Im Anschluss an die Sicherung des Gegengewichts 86 kann nun die Demontage der Handhabungseinrichtung 80 erfolgen. Hierfür müssen sämtliche Verbindungsleitungen zur Handhabungseinrichtung 84 getrennt werden, um diese von der Hubwerkssäule 82 abbauen zu können. Im Anschluss daran kann die Hubwerkssäule 82 für den Transport umgelegt werden (vgl. Fig. 6b, rechts). Auf Grund des hohen Gewichts der Hubwerkssäule 82 und des darin befindlichen Gegengewichts 86 sind allerdings Kräne oder Schwerlastflurförderzeuge zum Umlegen der Hubwerkssäule 82 notwendig. Bedingt durch die für den Transport notwendige, mehr oder weniger komplette, Demontage des Palettierers in seine einzelnen Komponenten und Bauteile entsteht ein hoher Zeitaufwand; zudem erfordert die Zerlegung und der Zusammenbau schwere Gerätschaften wie Stapler oder Kräne. Zudem stellt sich ein erhöhtes Risiko dahingehend dar, dass bei dem Wiederzusammenbau und Aufstellen eines Palettierers Fehler in der Montage oder beim Wiederherstellen der Verbindungsleitungen (elektrisch / pneumatisch) auftreten können. Nicht zuletzt können während des Abbaus für den Transport oder dem Wiederaufbau des Palettierers auch Beschädigungen durch unsachgemäße Handhabung und Verwendung der Hilfsmittel wie Stapler oder dgl. entstehen. CN 2765896 Y beschreibt eine gattungsgemäße vorrichtung.

Ein Ziel der vorliegenden Erfindung besteht somit darin, eine Palettier-, und/oder Zwischenlageneinlegevorrichtung zur Verfügung zu stellen, welche mit geringem Handhabungsaufwand in eine für den Transport geeignete Position gebracht werden kann, und die sich an einem Produktionsstandort schnell und mit wenigen Schritten wieder in einen betriebsfertigen Zustand versetzen lässt.

Die Erfindung wird nachfolgend beispielhaft durch eine Palettiervorrichtung beschrieben. Dies soll jedoch in keiner Weise einschränkend dahingehend verstanden werden, dass die Erfindung sich nur auf eine Palettiervorrichtung beziehen kann. Die Erfindung ist gleichermaßen auf jegliche Vorrichtungen übertragbar, welche den gleichen oder annähernd gleichen Grundaufbau wie eine nachfolgend beschriebene Palettiervorrichtung umfasst. So ist die Erfindung auch auf einen Zwischenlageneinleger übertragbar, der die gleichen Grundaufbauten bzw. Komponenten besitzt.

Das genannte Ziel der Erfindung wird mit dem Gegenstand des unabhängigen Anspruchs erreicht. Merkmale vorteilhafter Weiterbildungen der Erfindung finden sich in den abhängigen Ansprüchen. Zur Erreichung des genannten Ziels schlägt die Erfindung eine Palettier-, Stapel- und/oder Handhabungsvorrichtung mit zumindest einer Hubwerksäule und einer daran angeordneten Handhabungseinrichtung für Transportgüter vor. Diese vertikal bewegliche Handhabungseinrichtung kann bspw. durch eine Auflage- und/oder Transportebene, eine Greifeinrichtung o. dgl. für Transportgüter wie Stückgüter, Gebinde, Palettenlagen oder bspw. auch Zwischenlagen o. dgl. gebildet sein. Wie erwähnt, kann die Handhabungseinrichtung auch durch einen sog. Zwischenlageneinleger o. dgl. gebildet sein. Die Handhabungseinrichtung ist entlang der sich annähernd vertikal erstreckenden Hubwerksäule beweglich, d.h. nach Bedarf heb- und senkbar. Die Hubwerksäule mit der vertikal beweglichen Handhabungseinrichtung wird im vorliegenden Zusammenhang auch als Hubwerk bezeichnet, das den wesentlichen Teil der erfindungsgemäßen Vorrichtung bildet.

Die Hubwerksäule weist wenigstens zwei in vertikaler Längserstreckungsrichtung aneinander gefügte und in einer normalen Betriebslage weitgehend fluchtend aneinander und damit übereinander fixierte Säulenabschnitte auf. Der Begriff der Betriebslage meint in diesem Zusammenhang den Zustand der Vorrichtung bzw. die Position der Hubwerksäule, in der sie in Betrieb genommen werden kann, in der also die Handhabungsvorrichtung in vertikaler Richtung entlang der Hubwerksäule bewegt werden kann. Ein unterer Säulenabschnitt ist dabei an einem auf einer festen Unterlage stehenden und/oder fixierten Basis- oder Sockelabschnitt der Palettiervorrichtung verankert oder kann ggf. auch Teil eines Basisabschnittes sein, während ein oberer Säulenabschnitt in der Betriebslage in fluchtender Position am unteren Säulenabschnitt fixiert ist, so dass sich die Hubwerksäule in stabiler und weitgehend unbeweglicher Position befindet. Eine zwischen den beiden Stoßstellen der Säulenabschnitte befindliche Trennstelle ermöglicht die Trennung des oberen Säulenabschnittes vom feststehenden unteren Säulenabschnitt. Die Trennstelle kann insbesondere dazu genutzt werden, die Hubwerksäule zu zerlegen, zu trennen, zu klappen oder anderweitig in ihrer Position zu verändern, um die Vorrichtung besser geeignet für den Transport zu machen. So kann der obere Säulenabschnitt bspw. in einer Transportlage über die zwischen den Säulenabschnitten befindliche Trennstelle in eine gegenüber dem unteren Säulenabschnitt abgewinkelte Lage gebracht werden. Diese auftrennbare Verbindungsstelle zwischen unteren und oberen Säulenabschnitten, die im vorliegenden Zusammenhang als Trennstelle bezeichnet ist, kann wahlweise eine lösbare stirnseitige Verbindung zwischen den Säulenabschnitten ermöglichen. Wahlweise kann die Trennstelle auch ein zwischen den Säulenabschnitten befindliches Scharniergelenk umfassen, so dass der obere Säulenabschnitt gegenüber dem feststehenden unteren Säulenabschnitt verschwenkt bzw. umgeklappt werden kann, sofern dies für Transportzwecke notwendig ist.

Grundsätzlich kann die Trennstelle nahezu in beliebiger Höhe der Hubwerksäule liegen. Wahlweise jedoch kann die vorliegende Erfindung den Bereich der Trennstelle in einer Höhe definieren, die unterhalb der halben Gesamthöhe der Hubwerksäule liegt. Die Trennstelle zwischen den beiden voneinander trennbaren oder gegeneinander verschwenkbaren Säulenabschnitten liegt somit vorzugsweise höchstens so hoch, dass der obere Säulenabschnitt maximal halb so hoch ist wie die Gesamtlänge der aufrecht stehenden Hubwerksäule. Normalerweise jedoch liegt die Trennstelle etwas tiefer, da eine Höhe des unteren Säulenabschnittes ausreicht, in der das Gegengewicht für die Überführung der Vorrichtung in die Transportlage Platz findet und sicher fixiert werden kann.

Wie bereits erwähnt, ist der Begriff des unteren Säulenabschnittes funktional zu verstehen, da je nach Ausführung der Vorrichtung bzw. des Hubwerks kein gegenständlicher unterer Säulenabschnitt vorhanden sein muss, wenn dieser bspw. in die Gesamtkonstruktion des Sockel- oder Basisabschnittes der Palettier-, Stapel- und/oder Handhabungsvorrichtung integriert ist. Somit ist auch die Gesamthöhe der Hubwerksäule eher funktional zu verstehen als vertikaler Hubbereich für die Handhabungseinrichtung zwischen deren unterem Vertikalanschlag und deren oberem Vertikalanschlag. Die Trennstelle liegt normalerweise im unteren Drittels dieser funktional zu verstehenden Gesamthöhe der Hubwerksäule, da eine solche Höhe für ein Gegengewicht normaler Größe ausreicht. Der untere Säulenabschnitt kann hierbei als Aufnahmebehälter für das Gegengewicht fungieren, das vorzugsweise gegen Verrutschen zu sichern ist und ggf. von der Handhabungseinrichtung und der Antriebseinheit getrennt werden kann, bspw. durch Trennung einer Verbindung zu einem Zugmittel wie einem Riemen o. dgl. Je nach Zweckmäßigkeit kann die Trennstelle jedoch auch höher liegen, wenn bspw. die Gesamtkonstruktion der Vorrichtung mit dem umgeklappten oder umgelegten oberen Säulenabschnitt eine entsprechend höher positionierte Trennstelle sinnvoll und günstig erscheinen lässt.

Gemäß der vorliegenden Erfindung ist die Handhabungseinrichtung in der Transportlage der Vorrichtung bzw. des Hubwerks von einem in der Betriebslage mit der Handhabungseinrichtung gekoppelten und entlang der Hubwerksäule in vertikaler Richtung und gegensinnig zur vertikalen Bewegung der Handhabungseinrichtung beweglichen Gegengewicht getrennt. Da das Gegengewicht über ein geeignetes Zugmittel wie einen Riemen oder einen Zahnriemen, der an der Oberseite bzw. am oberen stirnseitigen Ende der aufrecht stehenden Hubwerksäule umgelenkt ist, mit der Handhabungseinrichtung in einer Weise gekoppelt ist, dass diese vertikal beweglichen Teile jeweils gegensinnige Bewegungen beim Heben und Senken der Handhabungseinrichtung durchführen, muss diese Verbindung getrennt werden, wenn die beiden Teile voneinander entkoppelt werden sollen. Das Zugmittel wirkt mit einer Antriebseinheit zusammen, die für die motorisch betriebenen Hebe- und Senkbewegungen der Handhabungseinrichtung und den gegensinnigen Vertikalbewegungen des Gegengewichts sorgt. Nach Trennung der Koppelung zwischen der Handhabungseinrichtung und dem Gegengewicht und/oder der Antriebseinrichtung können beide Teile abgesenkt werden. Insbesondere können die Handhabungseinrichtung und das von dieser entkoppelte Gegengewicht zur Herstellung der Transportlage der Vorrichtung bzw. des Hubwerks jeweils in eine unterste Hubposition oder auf einen unteren Bewegungsanschlag abgesenkt werden. Auf diese Weise kann der obere Säulenabschnitt der Hubwerksäule in vorteilhafter Weise umgelegt, verschwenkt und/oder vom unteren Säulenabschnitt getrennt werden, ohne dass dies durch das Gewicht der Handhabungseinrichtung oder des Gegengewichts erschwert oder behindert wird. Der obere Säulenabschnitt wird vielmehr von den zusätzlichen Gewichten befreit und kann dadurch problemlos in die Transportlage überführt werden. In dieser Transportlage bei umgelegtem oder verschwenktem oberen Säulenabschnitt sind sowohl das Gegengewicht als auch die Handhabungseinrichtung räumlich jeweils dem unteren Säulenabschnitt zugeordnet. Der untere Säulenabschnitt lässt sich dazu nutzen, um das Gegengewicht aufzunehmen und dort ggf. zu befestigen, so dass es bei einem Transport der Vorrichtung weitgehend spielfrei dort fixiert ist.

Wenn im vorliegenden Zusammenhang von einem unteren und einem oberen Säulenabschnitt der Hubwerksäule die Rede ist, so ist funktional zu verstehen, da insbesondere der untere Säulenabschnitt kein eigenes Bauteil sein muss, sondern wahlweise ein Teil des Sockels oder Basisbereichs des Hubwerks bzw. der Palettiervorrichtung sein kann. Der sich daran anschließende obere Säulenabschnitt ist dagegen in aller Regel ein konkretes Funktionselement, das räumlich klar von den übrigen Bauteilen abgrenzbar ist.

Bei einer Ausbildung der den unteren mit dem oberen Säulenabschnitt verbindenden Trennstelle durch ein Scharniergelenk kann nach Trennen von zusätzlichen Fixierungselementen, insbesondere von Verschraubungen zwischen den Säulenabschnitten, der obere Säulenabschnitt in eine gegenüber dem vertikalen unteren Säulenabschnitt abgewinkelte Lage verschwenkt werden. Wahlweise kann die Hubwerksäule auch durch mehr als zwei voneinander trennbare und/oder gegeneinander verschwenkbare Teile bzw. Säulenabschnitte gebildet sein. Bei einer Ausbildung der den unteren mit dem oberen Säulenabschnitt verbindenden Trennstelle durch eine lösbare Schraubverbindung oder anderweitige Fixierung kann nach Trennen von entsprechenden Fixierungselementen, insbesondere von Verschraubungen zwischen den Säulenabschnitten, der obere Säulenabschnitt vom unteren Säulenabschnitt getrennt und danach in eine gegenüber dem vertikalen unteren Säulenabschnitt abgewinkelte Lage gebracht werden.

Sinnvollerweise ist der obere Säulenabschnitt in der Transportlage in einer Richtung abgewinkelt, bei welcher er zumindest teilweise oberhalb der Handhabungseinrichtung des Hubwerks abgelegt ist. Er kann somit in der abgewinkelten Lage über der Handhabungseinrichtung des Hubwerks und dem Sockel bzw. Basisabschnitt der Vorrichtung liegen, wodurch das Packmaß der gesamten Vorrichtung für Transportzwecke zumindest soweit reduziert ist, dass ein Transport ohne Zerlegung ermöglicht ist, bspw. in einer Containerverpackung.

Damit besteht der besondere Vorteil der erfindungsgemäßen Palettier- Stapel- und/oder Handhabungsvorrichtung in der leichten Handhabbarkeit bei der Aufstellung oder der Umsetzung der Vorrichtung, die sehr schnell und einfach durchgeführt werden können, da weder eine Komplettierung und ein Zusammenbau von zerlegten Einzelteilen noch eine aufwändige Verkabelung der während des Transports getrennten Komponenten erforderlich ist. Aufgrund des lediglich umgeklappten oder zumindest nahe des unteren Säulenabschnittes befindlichen oberen Säulenabschnittes können Leitungs- und Kabelverbindungen auch während des Transports angeschlossen bleiben, was die Inbetriebnahme erheblich vereinfacht.

Ein kompaktes Transportvolumen der Vorrichtung lässt sich bspw. dadurch erreichen, dass der in Transportlage abgewinkelte obere Säulenabschnitt in einem Winkel zwischen 60 und 120 Grad zur Vertikalen und dem unteren Säulenabschnitt abgelegt werden kann. Bei einer Aufteilung der Säulenabschnitte in einem Verhältnis von ungefähr 1/3 zu 2/3, bei welcher der obere Säulenabschnitt ungefähr die doppelte Länge des unteren Säulenabschnittes aufweisen kann, kann bei ausreichendem Platz eine Winkellage des umgelegten oberen Säulenabschnittes von deutlich mehr als 90 Grad sinnvoll sein, bspw. eine Winkellage von ca. 110 bis 120 Grad, so dass das obere Ende des oberen Säulenabschnittes deutlich tiefer als die Trennstelle zum liegen kommt.

Ein besonderer Vorteil bei der Handhabung der erfindungsgemäßen Vorrichtung ergibt sich dadurch, dass sowohl die Handhabungseinrichtung als auch das Gegengewicht in der Transportlage der Vorrichtung jeweils in einer untersten Hubposition oder auf einem unteren Bewegungsanschlag abgesenkt sind. Da die heb- und senkbare Handhabungseinrichtung normalerweise mit einem entlang der Hubwerksäule geführten Gegengewicht gekoppelt ist, das bei allen Auf- und Abwärtsbewegungen jeweils gegensinnige Hubbewegungen durchführt, kann der obere Säulenabschnitt nicht einfach umgelegt werden, wenn sich die Handhabungseinrichtung in der untersten Endlage befindet. Zuvor muss das Gegengewicht von der Handhabungseinrichtung getrennt bzw. entkoppelt werden. Um die Vorrichtung für die Überführung in ihre Transportlage vorzubereiten, muss daher entweder die Handhabungseinrichtung oder das Gegengewicht in die jeweils untere Endlage gebracht werden. Nach Trennung der Verbindung zwischen dem Gegengewicht und der Handhabungseinrichtung - bspw. durch Trennung einer Anschlussverbindung eines Riemens oder Zugmittels - kann anschließend das jeweils in oberer Hublage an der Hubwerksäule befindliche Element nach unten befördert werden, was bspw. mittels einer manuell betätigbaren Hilfseinrichtung wie einer Handkurbel, einem elektromotorischen Hilfsantrieb o. dgl. erfolgen kann.

Die Hubwerksäule kann entweder als geschlossene Hohlsäule ausgebildet sein, bspw. mit einem rechteckförmigen Querschnitt und innerhalb der Hohlsäule geführtem Gegengewicht, oder sie kann als Fachwerksäule mit offenen Seitenflächen und ggf. einigen Querverstrebungen ausgebildet sein. Bei einer solchen Variante einer offenen Fachwerksäule kann vorgesehen sein, dass an der Rückseite der Fachwerksäule das Gegengewicht auf- und ablaufen kann. Bei beiden Varianten sind geeignete Trennstellen möglich, an denen bspw. mehrere Verschraubungen gelöst an schließend der obere Säulenabschnitt umgelegt werden können.

Eine Antriebseinheit für das Hubwerk, die vertikal heb- und senkbare Handhabungseinrichtung und das gegensinnig bewegliche Gegengewicht kann sich wahlweise im Sockelabschnitt bzw. in der Basiseinheit befinden, an der die Hubwerksäule stabil verankert ist. Eine typische Ausführungsvariante sieht jedoch eine Platzierung der Antriebseinheit am oberen Ende der Hubwerksäule vor. Bei der erfindungsgemäßen Ausführungsvariante kann sich die Antriebseinheit somit am oberen Ende des oberen Säulenabschnittes befinden, der für die Herstellung der Transportlage umgelegt wird. Der Sockel oder Basisabschnitt kann darüber hinaus auch eine Steuereinheit tragen, bspw. in einem Schaltkasten. Die Antriebseinheit sorgt normalerweise für einen elektromotorischen Antrieb der heb- und senkbaren Teile, kann aber ggf. auch andere Antriebsarten vorsehen, bspw. fluidische Antriebe.

Ein besonderer Vorteil der erfindungsgemäßen Vorrichtung mit der in wenigstens zwei gegeneinander verschwenkbare Säulenabschnitte trennbaren Hubwerksäule besteht in der sehr schnellen Installierbarkeit und Inbetriebnahme nach dem Transport. Bereits der Transport der Vorrichtung ist aufgrund der (Teil-)Zerlegbarkeit der Hubwerksäule sowie ggf. weiterer Komponenten der auf dem Basisabschnitt montierten Hub- und/oder Handhabungseinrichtungen gegenüber bekannten Palettiervorrichtungen deutlich vereinfacht, da das Packmaß eine definierte Größe aufweist, die bereits bei der Konstruktion der Vorrichtung berücksichtigt werden kann. Nach der Aufstellung der Vorrichtung, die aufgrund eines stabilen und über Einstelleinrichtungen zur Feinjustierung der Höhe und der horizontalen Ausrichtungen verfügenden Sockels nicht unbedingt fest im Boden oder Fundament verankert werden muss, kann diese sehr schnell in einen betriebsfähigen Zustand überführt werden, indem die Hubwerksäule in ihre Betriebslage in vertikaler Ausrichtung gebracht und die höhenverstellbare Handhabungseinrichtung - ggf. mit Quertraverse - mit dem Gegengewicht verbunden wird. Die Installation wird darüber hinaus deutlich dadurch vereinfacht, dass entlang der trennbaren und/oder klappbaren Hubwerksäule ein zumindest im Bereich der Trennstelle flexibler Leitungsstrang mit elektrischen und/oder fluidischen Steuer- und/oder Versorgungsleitungen verläuft, der sowohl in der Betriebslage als auch in der Transportlage der Vorrichtung ungetrennt bleibt. D.h. alle wesentlichen Komponenten der Vorrichtung können bereits beim ersten Zusammenbau mit allen Versorgungs- und Steuerleitungen versehen werden, wonach diese Leitungen auch in der Transportstellung der Vorrichtung angeschlossen bleiben können. Alle Leitungen, die entlang der Hubwerksäule und/oder in deren unmittelbarer Umgebung verlaufen, können ebenfalls angeschlossen bleiben und werden ggf. nur abgewinkelt.

Der obere Abschnitt der Hubwerksäule ist in der Betriebslage des Hubwerks der erfindungsgemäßen Vorrichtung starr am unteren Abschnitt verankert, bspw. durch Verschraubungen o.dgl., damit eine möglichst verwindungssteife Verbindung geschaffen ist, die keine Nachteile gegenüber einer einteiligen Ausführung der Säule zeigt. Diese Verschraubung kann bspw. über eine Flanschverbindung, über geeignete formschlüssige Überlappungen der miteinander zu verbindenden Abschnitte der Hubwerksäule oder über geeignete Schnellverschlüsse erfolgen. Auch bei einer durch eine Fachwerkkonstruktion gebildeten Hubwerksäule sind solche Verschraubungen sinnvoll, wobei hier Passstücke, Blechstreifen o. dgl. für die erforderliche Stabilität und Steifigkeit der Verbindung sorgen können.

Eine Variante der erfindungsgemäßen Vorrichtung kann vorsehen, dass das Hubwerk eine zusätzliche Quertraverse trägt, die neben der Vertikalbewegung der Handhabungseinrichtung zusätzliche Horizontalbewegungen erlaubt, so dass mit der Vorrichtung bspw. zwei oder drei nebeneinander stehende Stapelplätze bedient werden können. Auch ein fest an dem vertikal beweglichen Element montiertes Palettensegment bzw. eine fest montierte Beladeeinheit sind denkbar.

Eine weitere vorteilhafte Ausführungsvariante der erfindungsgemäßen Vorrichtung mit dem entlang der sich vertikal erstreckenden Hubwerksäule beweglichen Trag- und/oder Handhabungselement für Transportgüter und dem gegensinnig zum Trag- und/oder Handhabungselement vertikal beweglichen Gegengewicht kann vorsehen, dass das Gegengewicht einen oder mehrere Hohlbehälter umfasst, der/die mit einer losen Schüttung aus granulatartigem Ballastmaterial variabler Menge befüllt ist/sind. Der oder die Hohlbehälter kann/können wahlweise oben offen oder mit einem verschließbaren Deckel ausgestattet sein, um die lose Schüttung vor Umwelteinflüssen abzuschirmen. Der Hohlbehälter kann einteilig oder mehrteilig ausgebildet sein, wobei er wahlweise in mehrere Fächer unterteilt sein kann. Die lose Schüttung kann aus den unterschiedlichsten geeigneten Materialien gebildet sein. So kann sie bspw. metallisches Granulat aufweisen, wobei die lose Schüttung im Wesentlichen durch Kugeln oder unregelmäßig geformtes Granulat unterschiedlichen Durchmessers oder Ausmaßes gebildet sein kann. Dabei können die Zwischenräume zwischen größeren Kugeln oder Körpern in vorteilhafter Weise durch kleinere Kugeln oder Körper weitgehend ausgefüllt sein. Besonders bevorzugt besteht das Schüttgut aus einer Mischung von unterschiedlich großen Kugeln oder Körpern. Als Schüttmaterial kommt bspw. Stahlguss o.ä. in Frage. Auch mineralisches Material wie Steine oder Glas eignet sich als Schüttgut oder Granulat, wahlweise auch Mischungen aus mineralischem und metallischem Granulat. Von Vorteil kann es u.U. sein, wenn das metallische Granulat eisenhaltig ist und unter dem Einfluss der Luftfeuchtigkeit korrodiert, so dass die einzelnen Teilchen stärker aneinander haften. Bei allen diesen Materialien kann jedoch auf Blei oder anderes teures und/oder umweltschädliches, weil schwer zu entsorgendes Material verzichtet werden.

Der Hohlkörper kann zudem wahlweise eine oder mehrere Auslassöffnungen an der Behälterunterseite zur Entnahme der Schüttung bzw. eines Teils der Schüttung aufweisen. Diese Auslassöffnung kann bspw. durch eine Klappe, einen Schieber oder ein anderes Dosierelement gebildet sein. Zudem kann es von Vorteil sein, wenn der Hohlbehälter ein von außen ablesbares Schauglas und/oder eine innenseitig an einer Wand des Behälters ablesbare Skala aufweist. Wenn diese Skalierung zudem auf die der Höhe der Schüttung entsprechende Masse des Gegengewichtes hinweist, kann diese problemlos an die typische Belastung des Hubwerks bzw. der Handhabungseinrichtung der Palettiervorrichtung angepasst werden. Eine zusätzliche Option kann darin bestehen, den Hohlbehälter mit einer Wiegeeinrichtung zur Gewichtsbestimmung auszustatten, bspw. mit einer Federwaage, die innerhalb des Zugmittels angeordnet sein kann, welches das Gegengewicht mit dem Antriebsmotor verbindet. Es ist aber auch denkbar, die Wiegeeinrichtung direkt an der Unterseite des Hohlbehälters oder aber auch an dem unteren Ende der Hubwerkssäule, speziell am Boden bzw. unterem Ende innerhalb der Hubwerkssäule anzuordnen. Dies würde es ermöglichen, dass zur Gewichtsbestimmung und der eventuell notwendigen Gewichtsjustierung der Hohlbehälter auf der Wiegeeinrichtung aufsitzt, was relativ einfach mittels einer entsprechenden Steuerung des Antriebsmotors des Zugmittels und des damit in Verbindung stehenden Hohlbehälters möglich ist. So kann ohne hohen Aufwand sehr schnell das aktuelle Gegengewicht bestimmt werden und je nach Bedarf an unterschiedlichen Lastanforderungen das Gegengewicht optimal eingestellt werden.

Herkömmliche Gegengewichte oder Ballastelemente aus Bleiplatten ermöglichen keine solche Anpassung. Bei diesen Ballastelementen fehlt die gewünschte Flexibilität zum Anpassen des Gewichts an die jeweiligen Anforderungen. Demgegenüber ermöglicht die erfindungsgemäße Vorrichtung mit ihrem variablen Gegengewicht die Handhabung, das Heben und/oder Palettieren von stark unterschiedlichen Lasten, da bei jeweils unterschiedlichen anzuhebenden und abzusenkenden Lasten ein optimaler Gewichtsausgleich des Gegengewichts ermöglicht ist, so dass sich der Einsatzbereich der erfindungsgemäßen Vorrichtung erheblich erweitern lässt.

Soll die Höhe der Schüttung im Gegengewicht zu dessen Gewichtsanpassung variiert werden, so ist es von Vorteil, wenn der Hohlbehälter des Gegengewichts von außen zugänglich ist. Dies ist insbesondere der Fall, wenn die Hubwerksäule bspw. als offene Fachwerksäule ausgebildet ist, an dessen Rückseite das Gegengewicht in vertikaler Richtung beweglich ist. Wahlweise kann die Hubwerksäule jedoch auch als weitgehend geschlossene Hohlsäule ausgebildet sein, bei der das Gegengewicht innen in der Säule läuft. Bei einer solchen Ausführungsvariante sind entsprechende Maßnahmen vorzusehen, um den Hohlbehälter für die Variation der Schüttung zugänglich zu machen, bspw. durch eine von außen zugängliche Öffnung in der Hohlsäule der Hubwerksäule.

Die Erfindung schlägt zudem zur Erreichung des oben genannten Ziels ein Verfahren zur Überführung und/oder zum Umbau einer Palettier- Stapel- und/oder Handhabungsvorrichtung vor, das ein Hubwerk und eine daran angeordnete und zumindest in vertikaler Richtung verstellbare Handhabungseinrichtung, Auflage- und/oder Transportebene, Greifeinrichtung o. dgl. für Transportgüter aufweist, die entlang einer sich annähernd vertikal erstreckenden Hubwerksäule beweglich ist. Das Verfahren sieht den Umbau bzw. die Überführung zwischen einer Betriebslage, in welcher die Hubwerksäule durch wenigstens zwei in vertikaler Längserstreckungsrichtung aneinander gefügte und weitgehend fluchtend aneinander fixierte Säulenabschnitte gebildet ist, und einer Transportlage vor, in welcher der obere Säulenabschnitt über eine zwischen den Säulenabschnitten befindliche Trennstelle in eine gegenüber dem unteren Säulenabschnitt abgewinkelte Lage gebracht ist. Weiterhin ist bei dem Verfahren vorgesehen, dass die Handhabungseinrichtung zur Herstellung der Transportlage der Vorrichtung bzw. des Hubwerks von einem in der Betriebslage mit der Handhabungseinrichtung gekoppelten und entlang der Hubwerksäule in vertikaler Richtung und gegensinnig zur vertikalen Bewegung der Handhabungseinrichtung beweglichen Gegengewicht getrennt wird.

Eine erste Variante des Verfahrens kann vorsehen, dass das Gegengewicht zur Herstellung der Transportlage in eine unterste Vertikalposition und/oder an einen unteren Bewegungsanschlag abgesenkt und von der in oberer Vertikalposition befindlichen Handhabungseinrichtung getrennt wird, wonach diese ebenfalls auf eine unterste Vertikalposition und/oder an einen unteren Bewegungsanschlag abgesenkt und anschließend der obere Säulenabschnitt umgelegt wird. Bei einer alternativen Variante des Verfahrens können diese Bewegungsabfolgen auch in umgekehrter Reihenfolge ablaufen, so dass zunächst die Handhabungseinrichtung zur Herstellung der Transportlage in eine unterste Vertikalposition und/oder an einen unteren Bewegungsanschlag abgesenkt und von dem in oberer Vertikalposition befindlichen Gegengewicht getrennt wird, wonach dieses ebenfalls auf eine unterste Vertikalposition und/oder an einen unteren Bewegungsanschlag abgesenkt und anschließend der obere Säulenabschnitt umgelegt wird. Bei beiden genannten Varianten kann vorgesehen sein, dass die in oberer Vertikalposition befindliche Handhabungseinrichtung bzw. das in oberer Vertikalposition befindliche Gegengewicht mittels einer manuell oder elektromotorisch betätigbaren Hebe- und Senkvorrichtung auf die unterste Vertikalposition absenkbar ist, bevor der obere Säulenabschnitt umgelegt bzw. vom unteren Säulenabschnitt getrennt wird.

Umgekehrt kann die Überführung der Vorrichtung bzw. des Hubwerks aus der Transportlage in die Betriebslage dadurch erfolgen, dass die Säulenabschnitte bei jeweils in unterer Position befindlicher Handhabungseinrichtung und Gegengewicht in eine fluchtende vertikale Position gebracht und aneinander fixiert werden, wonach die Handhabungseinrichtung oder das Gegengewicht aus der untersten Vertikalposition im Bereich des unteren Säulenabschnittes in die obere Vertikalposition im Bereich des oberen Säulenabschnittes gebracht und mit dem in unterer Vertikalposition befindlichen Gegengewicht bzw. der Handhabungseinrichtung wirkverbunden wird. Die Herstellung dieser mechanischen Koppelung erfolgt normalerweise durch eine Fixierung des mit der Antriebseinrichtung gekoppelten und an der Oberseite der Hubwerksäule umgelenkten Zugmittels am Gegengewicht bzw. an der Handhabungseinrichtung.

Die weiteren Aspekte und Vorteile des erfindungsgemäßen Verfahrens wie die flexible und ungetrennt bleibende Leitungsverbindung zwischen oberem und unterem Säulenabschnitt, die leichte Handhabbarkeit aufgrund der kompakten Abmessungen der Vorrichtung in der Transportlage und die schnelle Wiederherstellung der Betriebslage nach der endgültigen Positionierung der Vorrichtung an ihrem Einsatzort wurden bereits weiter oben dargestellt und ausführlich erläutert.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Darstellung einer Ausführungsvariante einer erfindungsgemäßen Palettier-, Stapel- und/oder Handhabungsvorrichtung.
Fig. 2 zeigt eine schematische Seitenansicht der in einem Betriebszustand befindlichen Vorrichtung gemäß Fig. 1.
Fig. 3 zeigt eine schematische Seitenansicht der in einem Transportzustand befindlichen Vorrichtung.
Fig. 4 zeigt eine perspektivische Darstellung der Vorrichtung gemäß Fig. 3.
Fig. 5 zeigt in fünf schematischen Ansichten aufeinander folgende Verfahrensschritte bei der Überführung der Vorrichtung aus einer Betriebslage in eine Transportlage.
Fig. 6 zeigt in mehreren schematischen Ansichten eine Palettiervorrichtung gemäß bekanntem Stand der Technik.

Für gleiche oder gleich wirkende Elemente der Erfindung verwendet die nachfolgende Figurenbeschreibung identische Bezugszeichen. Der Übersicht halber sind nur solche Bezugszeichen in den einzelnen Figuren dargestellt, die für die Beschreibung der jeweiligen Figur erforderlich oder sinnvoll sind. Die nicht einschränkend zu verstehenden dargestellten Ausführungsformen stellen lediglich Beispiele dar, wie die erfindungsgemäße Vorrichtung ausgestaltet sein kann.

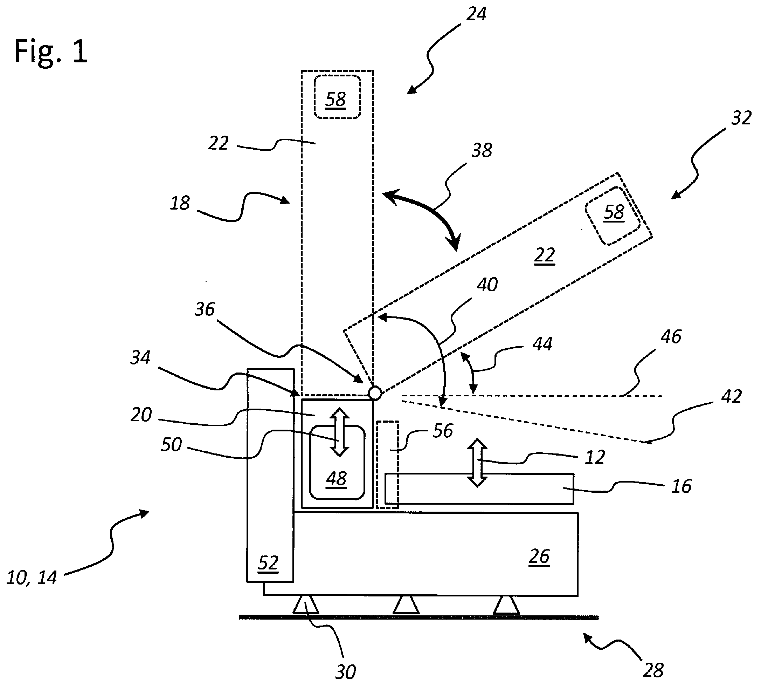

Die schematische Seitenansicht der Fig. 1 zeigt die wesentlichen Komponenten einer Ausführungsvariante einer erfindungsgemäßen Palettier-, Stapel- und/oder Handhabungsvorrichtung 10, die ein Hubwerk 14 mit einer daran angeordneten und in vertikaler Richtung 12 verstellbaren Handhabungseinrichtung 16 für Transportgüter aufweist. Die hier nicht näher spezifizierte, vertikal bewegliche Handhabungseinrichtung 16 des Hubwerks 14 kann bspw. durch eine Auflage- und/oder Transportebene, eine Greifeinrichtung o. dgl. für Transportgüter wie Stückgüter, Gebinde, Palettenlagen oder bspw. auch Zwischenlagen o. dgl. gebildet sein. Da die Handhabungseinrichtung 16 die unterschiedlichsten Greif-, Stapel-, Palettier- oder Schubelemente aufweisen kann, wird das vertikal bewegliche Element der erfindungsgemäßen Vorrichtung 10 im vorliegenden Zusammenhang allgemein als Handhabungseinrichtung 16 bezeichnet, während das Hubwerk 14 die gesamte Hebe- und Senkeinrichtung der Vorrichtung 10 bezeichnet. Die Handhabungseinrichtung 16 ist entlang einer sich annähernd in vertikaler Richtung erstreckenden Hubwerksäule 18 beweglich und entlang dieser je nach Bedarf in Hubrichtung 12 heb- oder senkbar. Die Hubwerksäule 18 ist durch zwei Säulenabschnitte 20 und 22 gebildet, die in vertikaler Längserstreckungsrichtung aneinander gefügt und in einer Betriebslage 24 weitgehend fluchtend aneinander und damit stirnseitig übereinander fixiert sind. Ein unterer Säulenabschnitt 20 ist an einem Sockelabschnitt 26 der Palettiervorrichtung 10 verankert, der auf einer festen Unterlage oder einem Fundament 28 steht, ggf. über justierbare Stützfüße 30, um eine horizontale Justierung und Ausrichtung der Vorrichtung 10 an einem vorgesehenen Einsatz- oder Aufstellort zu ermöglichen.

Ein oberer Säulenabschnitt 22, der in der Betriebslage 24 mit dem unteren Säulenabschnitt 20 fluchtet, befindet sich in einer Transportlage 32 in einer gegenüber dem unteren Säulenabschnitt 20 abgewinkelten Position. Eine Trennstelle 34 zwischen den beiden Säulenabschnitten 20 und 22 kann wahlweise eine vollständige Trennung des oberen Säulenabschnittes 22 vom unteren Säulenabschnitt 20 ermöglichen. Wie im gezeigten Ausführungsbeispiel kann die Trennstelle 34 jedoch auch ein Scharniergelenk 36 aufweisen, das ein Verschwenken des oberen Säulenabschnittes 22 um eine horizontale Schwenkachse ermöglicht, wie dies in Fig. 1 angedeutet ist. Die Schwenkbewegung bzw. Schwenkrichtung des oberen Säulenabschnittes 22 um das Scharniergelenk 36 an der Trennstelle 34 ist durch den Doppelpfeil 38 angedeutet.

Ein Schwenkwinkel 40, der den maximalen Verschwenkbereich der Schwenkbewegung 38 und damit den Bewegungsanschlag des oberen Säulenabschnittes 22 in der Transportlage 32 definiert, kann wahlweise zwischen ca. 60 Grad und ca. 120 Grad oder etwas mehr als 120 Grad betragen, wobei dieser Schwenkwinkel 40 den Verschwenkbereich zwischen der Vertikalen (Betriebslage 24) und der Endlage 42 des oberen Säulenabschnittes 22 (Transportlage 32) abbildet. Die in der Fig. 1 angedeutete Schwenklage des oberen Säulenabschnittes 22 sieht einen eingeschlossenen spitzen Winkel 44 zwischen der Horizontalen 46 und der Längserstreckungsrichtung des oberen Säulenabschnittes 22 vor, ohne dass dadurch bereits der maximale Schwenkwinkel 40 erreicht sein muss.

Endscheidend für die Funktion der vorliegenden Erfindung ist die erreichbare Reduzierung des Packmaßes der Palettiervorrichtung 10 für Transportzwecke sowie die Absenkung des Schwerpunktes nach unten in der Transportlage 32, was die Handhabung und den Transport der Vorrichtung 10 begünstigt und erleichtert.

An der Trennstelle 34 können lösbare Schraubverbindungen oder anderweitige Fixierungen vorgesehen sein, die in der Betriebslage 24 für eine stabile und weitgehend verwindungssteife Verbindung der beiden Säulenabschnitte 20 und 22 sorgen. Wie die Fig. 1 zeigt, ist der obere Säulenabschnitt 22 in der Transportlage 32 in einer Richtung abgewinkelt, bei welcher er teilweise oberhalb der Handhabungseinrichtung 16 des Hubwerks 14 bzw. der Vorrichtung 10 abgelegt ist. Er liegt somit in der abgewinkelten Lage über dem Sockelabschnitt 26 der Vorrichtung 10, wodurch das Packmaß der gesamten Vorrichtung 10 für Transportzwecke zumindest soweit reduziert ist, dass ein Transport ohne weitere Zerlegung ermöglicht ist, bspw. in einer Containerverpackung.

Die Längenverhältnisse der oberen und unteren Säulenabschnitte 22 und 20 richten sich zweckmäßigerweise nach den Abmessungen der einzelnen Komponenten der Vorrichtung 10. So kann der obere Säulenabschnitt 22 bspw. die doppelte oder dreifache Länge des unteren Säulenabschnitts 20 aufweisen.

Wie es die schematische Darstellung der Fig. 1 erkennen lässt, ist die Handhabungseinrichtung 16 in der Transportlage 32 der Vorrichtung 10 in einer untersten Hubposition oder auf einem unteren Bewegungsanschlag abgesenkt. Da die heb- und senkbare Handhabungseinrichtung 16 mit einem entlang der Hubwerksäule 18 geführten Gegengewicht 48 gekoppelt sind, das bei allen Auf- und Abwärtsbewegungen der Handhabungseinrichtung 14 jeweils gegensinnige Hubbewegungen 50 entlang der Hubwerksäule 18 durchführt, kann der obere Säulenabschnitt 22 erst dann aus seiner Betriebslage 24 gebracht und in die Transportlage 32 umgelegt werden, wenn sich die Handhabungseinrichtung 16 in der untersten Endlage befindet. Danach kann die mechanische Koppelung des Gegengewichts 48 vom Hubwerk 14 aufgetrennt werden. Um die Vorrichtung 10 für die Überführung in ihre Transportlage 32 vorzubereiten, muss daher entweder die Handhabungseinrichtung 16 oder das Gegengewicht 48 in die jeweilige untere Endlage gebracht werden. Nach Trennung der Verbindung zwischen dem Gegengewicht 48 und der Handhabungseinrichtung 16 kann anschließend das jeweils in oberer Hublage an der Hubwerksäule 18 befindliche Element nach unten befördert werden, was bspw. mittels einer manuell betätigbaren Hilfseinrichtung wie einer Handkurbel, einem elektromotorischen Hilfsantrieb o. dgl. erfolgen kann.

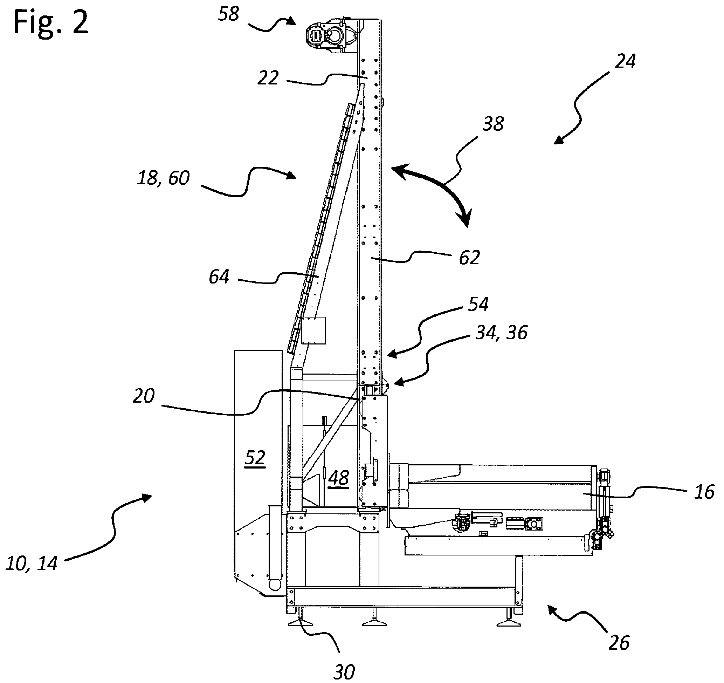

Eine hier nicht näher spezifizierte Antriebseinheit 58 für die Handhabungseinrichtung 16 des Hubwerks 14 und das gegensinnig bewegliche Gegengewicht 48 befindet sich vorzugsweise am oberen Ende des oberen Säulenabschnittes 22 (vgl. Fig. 2 ff.), kann sich aber wahlweise auch im Sockelabschnitt 26 befinden, an dem die Hubwerksäule 18 stabil verankert ist. Dieser Sockel 26 kann darüber hinaus auch eine Steuereinheit tragen, bspw. in einem Schaltkasten 52, der sich an einer der Handhabungseinrichtung 16 abgewandten Rückseite der Hubwerksäule 18 befinden kann. Die Antriebseinheit 58 kann bspw. einen elektromotorischen Antrieb zum Heben und Senken des Hubwerks 14 und des Gegengewichts 48 aufweisen. Wahlweise kann die Antriebseinheit 58 auch am oberen Ende des oberen Säulenabschnittes 22 angeordnet sein, wie dies die Figuren 2 bis 4 zeigen. Bei der dort gezeigten Variante ist der Sockelabschnitt 26 lediglich als Tragrahmen und offenes Stützgerüst ausgebildet und nicht als geschlossenes Gehäuse, das weitere Komponenten der Vorrichtung 10 aufnimmt.

Die Hubwerksäule 18 kann entweder als geschlossene Hohlsäule ausgebildet sein, bspw. mit einem rechteckförmigen Querschnitt und innerhalb der Hohlsäule geführtem Gegengewicht 48 (vgl. Fig. 1), oder sie kann bspw. als Fachwerksäule 60 mit offenen Seitenflächen und ggf. einigen Querverstrebungen oder Stützstreben 64 ausgebildet sein (vgl. Figuren 2 bis 4). Bei einer solchen Variante einer offenen Fachwerksäule kann vorgesehen sein, dass an der Rückseite der Fachwerksäule 60 das Gegengewicht 48 auf- und ablaufen kann. Bei beiden Varianten sind geeignete Trennstellen 34 möglich, an denen bspw. mehrere Verschraubungen 54 gelöst und anschließend der obere Säulenabschnitt 22 umgelegt werden können.

Die Handhabungseinrichtung 16 kann ggf. an einer heb- und senkbaren Quertraverse 56 angeordnet sein, die entlang der Längserstreckungsrichtung der Hubwerksäule 18 in vertikaler Richtung bewegbar ist. An dieser heb- und senkbaren Quertraverse 56 kann dann das die Handhabungseinrichtung 16 in einer Weise verankert sein, dass horizontale Querbewegungen senkrecht zur Zeichnungsebene der Fig. 1, d.h. parallel zur horizontalen Schwenkachse des Scharniergelenks 36, ermöglicht sind. Da diese Quertraverse 56 optional zu verstehen und nicht zwingend vorhanden sein muss, ist sie mit unterbrochenen Linien angedeutet. Eine mit einer solchen Quertraverse 56 ausgestattete Vorrichtung 10 kann somit bspw. zwei oder drei nebeneinander stehende Stapelplätze bedienen.

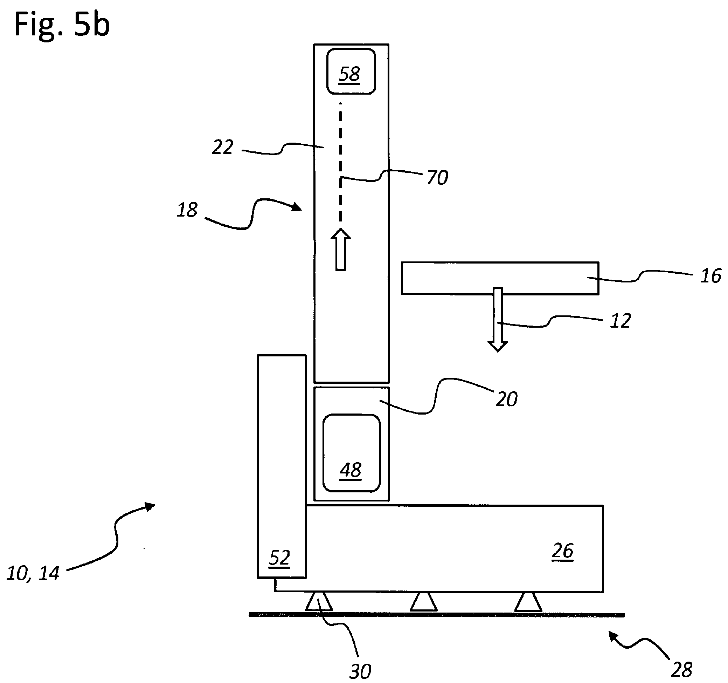

Wie es die Fig. 1 andeutet, liegt die Trennstelle 34 in einer Höhe, die unterhalb der halben Gesamthöhe der Hubwerksäule 18, normalerweise jedoch etwas tiefer, da eine Höhe des unteren Säulenabschnittes 20 ausreicht, in der das Gegengewicht 48 für die Überführung der Vorrichtung 10 in die Transportlage 32 ausreichend Platz findet und sicher fixiert werden kann. Der untere Säulenabschnitt 20 kann in der Transportlage 32 der Vorrichtung als Aufnahmebehälter für das Gegengewicht 48 fungieren, das vorzugsweise gegen Verrutschen zu sichern ist und ggf. von der Handhabungseinrichtung 16 und/oder der Antriebseinheit 58 getrennt werden kann, bspw. durch Trennung einer Verbindung zu einem Zugmittel 70 (vgl. Fig. 5b).

Die Figuren 2 bis 4 zeigen im Wesentlichen alle bereits genannten und anhand der Fig. 1 veranschaulichten Komponenten der erfindungsgemäßen Palettier- Stapel- und/oder Handhabungsvorrichtung 10. Deren Hubwerksäule 18 kann wie gezeigt als offene Fachwerksäule 60 ausgebildet sein, deren Hauptträger 62 bspw. durch Vierkant- oder U-Profilstücke gebildet sein können, an deren Rückseite Stützträger 64 angeordnet sind, die eine Verwindung und ein Durchbiegen der Hauptträger 60 bei einer Belastung der Hubwerksäule 18 durch Heben und Senken der eine Last tragenden Handhabungseinrichtung 16 verhindern sollen. An der Rückseite der Hauptträger 60 ist das Gegengewicht 48 geführt, das über die an oberster Stelle des oberen Säulenabschnittes 22 angeordneten Antriebseinheit 58 in gegensinniger Bewegung zum Hubwerk 14 bzw. der Handhabungseinrichtung 16 gehoben und gesenkt wird. Ein hier nicht dargestelltes Zugmittel wie bspw. ein Riemen verbindet das Gegengewicht 48 mit der Handhabungseinrichtung 16, wobei die obere Umlenkung an einem Antriebsrad der Antriebseinheit 58 gleichzeitig für das Heben und Senken der Handhabungseinrichtung 16 mitsamt der gegensinnigen Bewegung des Gegengewichts 48 sorgt.

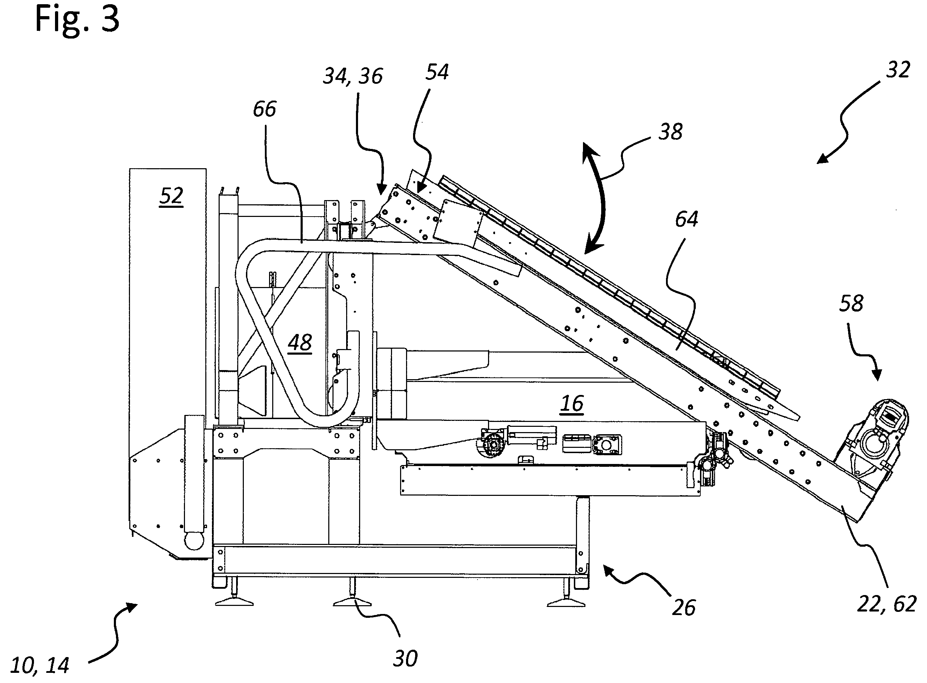

Während die Fig. 2 die in Betriebslage 24 befindliche Vorrichtung 10 zeigt, befindet sich die Vorrichtung 10 in der Darstellung der Fig. 3 in ihrer Transportlage 32 mit abgesenktem oberem Säulenabschnitt 22, nach unten abgesenkter Handhabungseinrichtung 16 und abgesenktem Gegengewicht 48, dessen Zugverbindung zur Antriebseinheit 58 getrennt ist. Die Fig. 3 veranschaulicht damit den besonderen Vorteil der erfindungsgemäßen Palettier- Stapel- und/oder Handhabungsvorrichtung 10, die schnell und mit wenigen Installationsschritten von ihrer Transportlage 32 in die Betriebslage 24 gebracht werden kann, da weder eine Komplettierung und ein Zusammenbau von zerlegten Einzelteilen noch eine aufwändige Verkabelung der während des Transports getrennten Komponenten erforderlich ist. Aufgrund des lediglich umgeklappten oberen Säulenabschnittes 22 können Leitungs- und Kabelverbindungen auch während des Transports angeschlossen bleiben, was die Inbetriebnahme erheblich vereinfacht. Vor dem Umlegen der Hauptträger 62 des oberen Säulenabschnittes 22 müssen die Verschraubungen 54 an der Trennstelle 34 gelöst werden, sowohl an den Hauptträgern 62 als auch an den Stützträgern 64. Wie es die Fig. 3 erkennen lässt, können die Stützträger 64 wahlweise an der Rückseite der Hauptträger 62 abgelegt und dort befestigt werden. Für den Transport der Vorrichtung 10 ist es jedoch ebenso möglich, die Stützträger 64 zu demontieren und getrennt von der in der Transportlage 32 befindlichen Vorrichtung 10 aufzubewahren und zu transportieren.

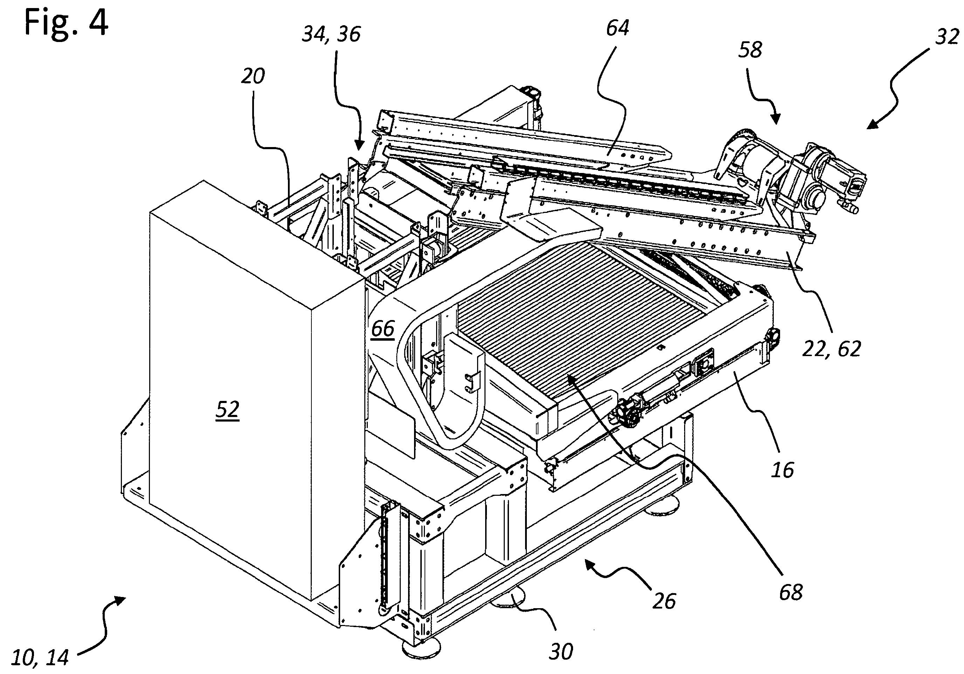

Die schematische Seitenansicht der Fig. 3 und die Perspektivdarstellung der Fig. 4 verdeutlichen die Anordnung eines flexiblen Leitungs- und Kabelstranges 66, der alle notwendigen elektrischen und/oder fluidischen Steuer- und/oder Versorgungsleitungen in gebündelter Form aufnehmen kann. Mit Hilfe dieses Leitungsstranges 66 wird die Installation der Vorrichtung 10 stark vereinfacht, da die Leitungen entlang der trennbaren und klappbaren Hubwerksäule 18 und im Bereich der Trennstelle 34 flexibel geführt sind, so dass der Leitungsstrang 66 mit seinen elektrischen und/oder fluidischen Steuer- und/oder Versorgungsleitungen sowohl in der Betriebslage 24 als auch in der Transportlage 32 der Vorrichtung 10 ungetrennt bleiben kann. Alle wesentlichen Komponenten der Vorrichtung 10 können bereits beim ersten Zusammenbau mit allen Versorgungs- und Steuerleitungen verbunden werden, wonach diese Leitungen auch in der Transportstellung 32 der Vorrichtung 10 angeschlossen bleiben können. Alle Leitungen, die entlang der Hubwerksäule 18 und/oder in deren unmittelbarer Umgebung verlaufen, können ebenfalls angeschlossen bleiben und werden ggf. nur abgewinkelt.

Wie es die Figuren 3 und 4 verdeutlichen, kann der Leitungs- und Kabelstrang 66 bspw. in einer Form geführt sein, dass er bei umgelegtem oberen Säulenabschnitt 22 mit einem ausreichend großen Krümmungsradius umgelenkt wird, während er bei in Betriebslage 24 aufgestelltem oberen Säulenabschnitt 22 (Fig. 2) entweder gestreckt oder in einer S-förmigen Schlaufe zum Ausgleich von Längentoleranzen verlaufen kann.

Die perspektivische Ansicht der Fig. 4 lässt eine Variante der heb- und senkbaren Handhabungseinrichtung 16 des Hubwerks 14 erkennen, die einen Horizontalförderabschnitt 68 zur Umsetzung von zuvor aufgenommenen Palettenlagen mit Fördergütern, Gebinden, Getränkebehältern o. dgl. in horizontaler Richtung aufweist. Die Fig. 4 lässt auch die U-förmigen Querschnitt der beiden Hauptträger 62 der Hubwerksäule 18 erkennen, an deren oberem Ende die Antriebseinheit 58 befestigt ist, die in der Transportstellung 32 auf ein Höhenniveau des in unterstem Bewegungsanschlag gebrachten Horizontalförderabschnittes 68 abgesenkt ist.

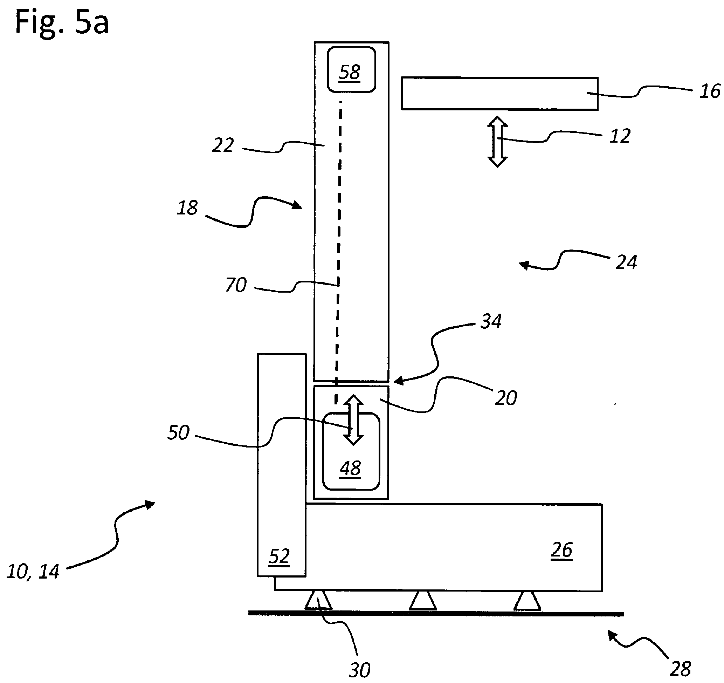

Die schematischen Darstellungen der Figuren 5a bis 5e verdeutlichen anhand eines Ausführungsbeispiels aufeinander folgende Verfahrensschritte, die zur Überführung und/oder zum Umbau der erfindungsgemäßen Palettier- Stapel- und/oder Handhabungsvorrichtung 10 gemäß Fig. 1 bis Fig. 4 zwischen der Betriebslage 24 und der Transportlage 32 erforderlich sind. Die Fig. 5a zeigt die Vorrichtung 10 bzw. das Hubwerk 14 in seiner Betriebslage 24, bei der die Handhabungseinrichtung 16 in vertikaler Richtung entlang der Längserstreckungsrichtung der Hubwerksäule 18 nach oben und unten bewegt werden kann. Gleichzeitig mit diesen Hubbewegungen 12 erfolgen gegensinnige Hubbewegungen 50 des entlang der Hubwerksäule 18 geführten Gegengewichts 48, da die Handhabungseinrichtung 16 und das Gegengewicht 48 über eine Zugverbindung wie bspw. ein Zugmittel 70 von der Antriebseinheit 58 gehoben und gesenkt werden. In der Darstellung der Fig. 5a befindet sich die Handhabungseinrichtung 16 in einer oberen Hubposition am oberen Säulenabschnitt 22, während sich das Gegengewicht 48 in einer unteren Position im Bereich des unteren Säulenabschnittes 20 befindet. Da der obere Säulenabschnitt 22 gemäß der vorliegenden Erfindung nicht umgelegt werden soll, solange sich dort die Handhabungseinrichtung 16 befindet, muss diese erst nach unten in Richtung zum Sockelabschnitt 26 bewegt werden (vgl. Fig. 5b), was jedoch die Entkoppelung der Zugverbindung zwischen der Handhabungseinrichtung 16 und dem Gegengewicht 48 erfordert. Zu diesem Zweck kann bspw. das Zugmittel 70 vom Gegengewicht 48 getrennt werden, was ggf. eine Absenkung der Handhabungseinrichtung 16 mittels der Antriebseinheit 58 ermöglicht. Wahlweise kann die Absenkung der Handhabungseinrichtung 16 auch mittels einer separaten Antriebseinheit, einer manuell betätigbaren Handkurbel (hier nicht dargestellt) o. dgl. erfolgen.

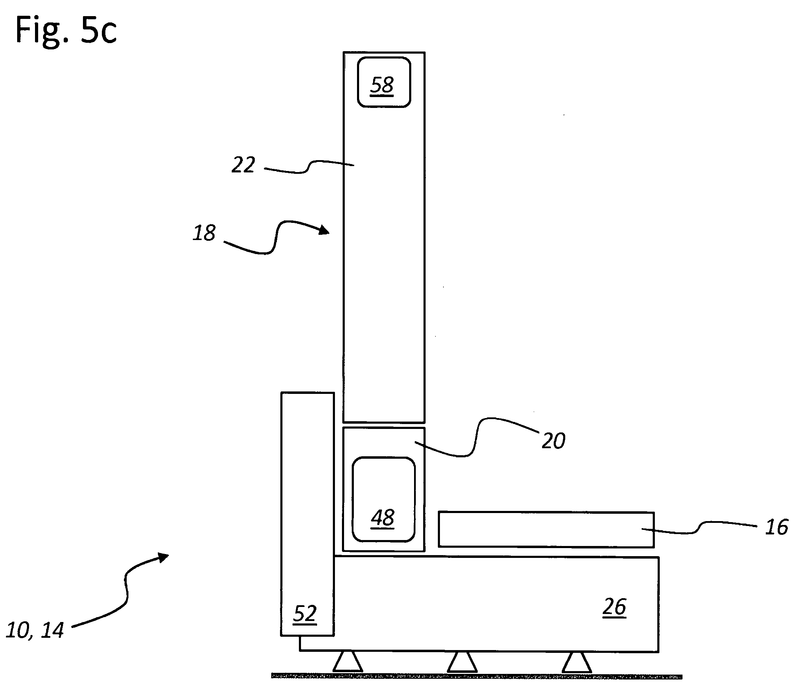

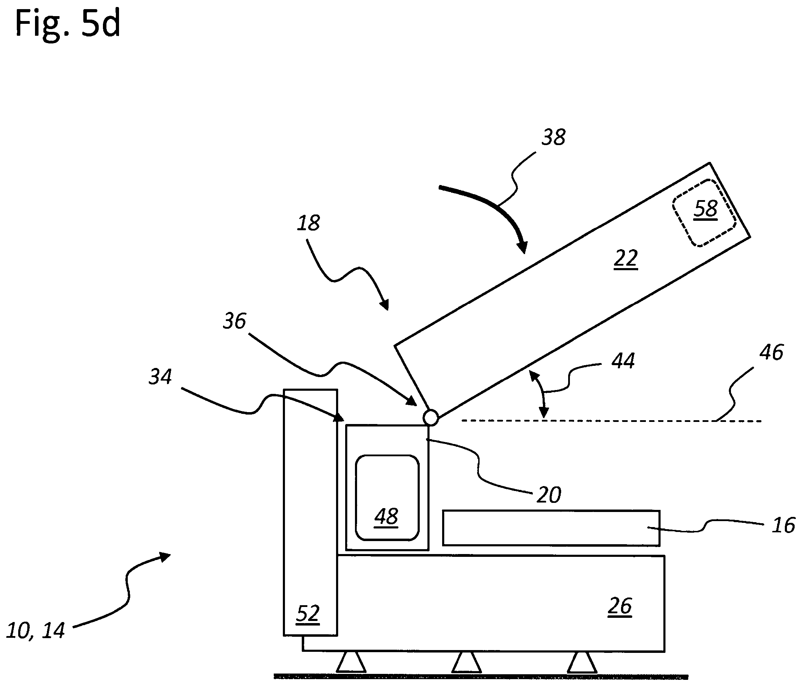

Nach der Absenkung der Handhabungseinrichtung 16 auf eine unterste Vertikalposition und/oder an einen unteren Bewegungsanschlag (vgl. Fig. 5c) kann anschließend der obere Säulenabschnitt 22 umgelegt werden. Nach Lösen der Schraubverbindungen 54 (vgl. Fig. 2) kann der obere Säulenabschnitt 22 gemäß Fig. 5d an der Trennstelle 34 vom unteren Säulenabschnitt 20 gelöst und um das Scharniergelenk 36 in Schwenkrichtung 38 umgelegt werden. Der Schwenkwinkel 44 zwischen dem oberen Säulenabschnitt 22 und der Horizontalen 46 richtet sich nach den baulichen Gegebenheiten und/oder den gewünschten Packmaßen der Vorrichtung 10, deren Hubwerksäule 18 in der gezeigten Weise in eine kompakte Anordnung gebracht wird, um die Transportlage 32 zu erreichen.

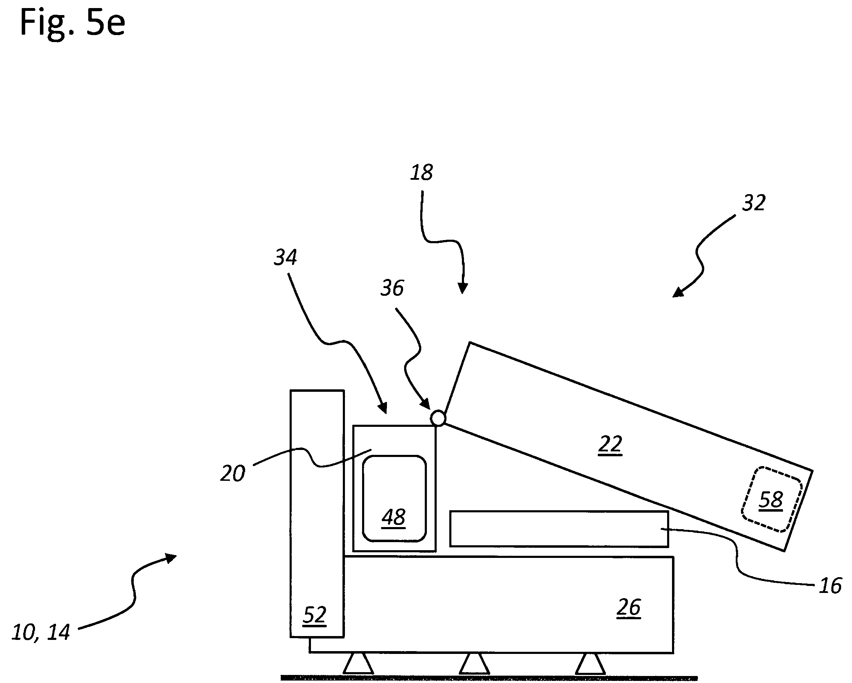

Diese Transportlage 32 mit um ca. 120 Grad gegenüber der Vertikalen und oberhalb der nach unten abgesenktem Handhabungseinrichtung 16 liegendem oberen Säulenabschnitt 22 ist in Fig. 5e gezeigt (vgl. hierzu auch Fig. 4). In dieser Anordnung weist die Vorrichtung 10 ein kompaktes Packmaß auf und lässt sich zudem problemlos mit einem Flurförderfahrzeug handhaben, aufstellen und einrichten, bevor zur Wiederherstellung der Betriebslage 24 (Fig. 5a) die gezeigten Verfahrensschritte in umgekehrter Reihenfolge durchgeführt werden können.

So kann die Überführung der Vorrichtung 10 aus der Transportlage 32 in die Betriebslage 24 dadurch erfolgen, dass die Säulenabschnitte 22, 20 bei jeweils in unterer Position befindlicher Handhabungseinrichtung 16 und Gegengewicht 48 in eine fluchtende vertikale Position gebracht und aneinander fixiert werden, wonach die Handhabungseinrichtung 16 oder das Gegengewicht 48 aus der untersten Vertikalposition im Bereich des unteren Säulenabschnittes 20 in die obere Vertikalposition im Bereich des oberen Säulenabschnittes 22 gebracht und mit dem in unterer Vertikalposition befindlichen Gegengewicht 48 bzw. der Handhabungseinrichtung 16 über das Zugmittel 70 verbunden wird. Die Herstellung der mechanischen Koppelung erfolgt durch eine Fixierung des mit der Antriebseinrichtung 58 gekoppelten und an der Oberseite der Hubwerksäule 18 umgelenkten Zugmittels 70 am Gegengewicht 48 bzw. an der Handhabungseinrichtung 16.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Vorrichtung, Palettier- Stapel- und/oder Handhabungsvorrichtung
- 12: Vertikalbewegung, Hubrichtung
- 14: Hubwerk
- 16: Handhabungseinrichtung
- 18: Hubwerksäule
- 20: unterer Säulenabschnitt
- 22: oberer Säulenabschnitt
- 24: Betriebslage
- 26: Sockelabschnitt
- 28: Fundament
- 30: Stützfuß
- 32: Transportlage
- 34: Trennstelle
- 36: Scharniergelenk
- 38: Schwenkrichtung
- 40: Schwenkwinkel
- 42: Endlage
- 44: spitzer Winkel
- 46: Horizontale
- 48: Gegengewicht
- 50: Hubbewegung
- 52: Schaltkasten
- 54: Verschraubung
- 56: Quertraverse
- 57: Verschraubung
- 58: Antriebseinheit
- 60: Fachwerksäule
- 62: Hauptträger
- 64: Stützträger
- 66: Leitungsstrang
- 68: Horizontalförderabschnitt
- 70: Zugmittel
- 80: Palettiervorrichtung (Stand der Technik)
- 82: Hubwerksäule (Stand der Technik)
- 84: Handhabungseinrichtung (Stand der Technik)
- 86: Gegengewicht (Stand der Technik)

## Patentansprüche

1. Palettier-, Stapel- und/oder Handhabungsvorrichtung (10) mit einem Hubwerk (14) und einer daran angeordneten und zumindest in vertikaler Richtung verstellbaren Handhabungseinrichtung (16), Auflage- und/oder Transportebene, Greifeinrichtung o. dgl. für Transportgüter, die entlang einer sich annähernd vertikal erstreckenden Hubwerksäule (18) beweglich ist, welche Hubwerksäule (18) wenigstens zwei in vertikaler Längserstreckungsrichtung und an einer Trennstelle (34) aneinander gefügte und aneinander fixierbare Säulenabschnitte (20, 22) aufweist, deren unterer Säulenabschnitt (20) an einem auf einer festen Unterlage (28) stehenden und/oder fixierten Basis- oder Sockelabschnitt (26) der Palettiervorrichtung (10) verankert ist, bei der die wenigstens zwei Säulenabschnitte (20, 22) der Hubwerksäule (18) in einer Betriebslage (24) weitgehend fluchtend aneinander fixiert sind, und bei der der obere Säulenabschnitt (22) in einer Transportlage (32) über die zwischen den Säulenabschnitten (20, 22) befindliche Trennstelle (34) in eine gegenüber dem unteren Säulenabschnitt (20) abgewinkelte Lage gebracht ist, **dadurch gekennzeichnet, dass** die Handhabungseinrichtung (16) in der Transportlage (32) der Vorrichtung (10) bzw. des Hubwerks (14) von einem in der Betriebslage mit der Handhabungseinrichtung (16) gekoppelten und entlang der Hubwerksäule (18) in vertikaler Richtung und gegensinnig zur vertikalen Bewegung der Handhabungseinrichtung (16) beweglichen Gegengewicht (48) getrennt ist.

2. Vorrichtung nach Anspruch 1, bei der das Gegengewicht (48) im Bereich des unteren Säulenabschnittes (20) unterhalb der Trennstelle (34) Platz findet und/oder dort weitgehend spielfrei fixierbar ist.

3. Vorrichtung nach einem der Ansprüche 1 bis 2, bei der die Handhabungseinrichtung (16) und das von dieser entkoppelte Gegengewicht (48) in der Transportlage (32) der Vorrichtung (10) bzw. des Hubwerks (14) jeweils in einer untersten Hubposition oder auf einem unteren Bewegungsanschlag abgesenkt sind.

4. Vorrichtung nach Anspruch 1 bis 3, bei der die Handhabungseinrichtung (16) und das Gegengewicht (48) in der Transportlage der Vorrichtung (10) bzw. des Hubwerks (14) jeweils dem unteren Säulenabschnitt (20) zugeordnet sind.

5. Vorrichtung nach einem der Ansprüche 1 bis 4, bei der die den unteren mit dem oberen Säulenabschnitt (20, 22) verbindende Trennstelle (34) durch ein Scharniergelenk (36) gebildet ist, um das der obere Säulenabschnitt (22) in eine gegenüber dem vertikalen unteren Säulenabschnitt (20) abgewinkelte Lage verschwenkbar ist.

6. Vorrichtung nach einem der Ansprüche 1 bis 5, bei welcher der obere Säulenabschnitt (22) in der Transportlage (32) in eine Richtung abgewinkelt ist, bei welcher er zumindest teilweise oberhalb der Handhabungseinrichtung (16) des Hubwerks (14) abgelegt ist.

7. Vorrichtung nach einem der Ansprüche 1 bis 6, bei welcher der in Transportlage (32) abgewinkelte obere Säulenabschnitt (22) in einem Winkel zwischen 60 und 120 Grad zur Vertikalen und dem unteren Säulenabschnitt (20) abgelegt ist.

8. Vorrichtung nach einem der Ansprüche 1 bis 7, bei der entlang der trennbaren und/oder klappbaren Hubwerksäule (18) ein zumindest im Bereich der Trennstelle (34) flexibler Leitungsstrang (66) mit elektrischen und/oder fluidischen Steuer- und/oder Versorgungsleitungen verläuft, der sowohl in der Betriebslage (24) als auch in der Transportlage (32) der Vorrichtung (10) ungetrennt bleibt.

9. Vorrichtung nach einem der Ansprüche 1 bis 8, bei der das Gegengewicht (48) einen oder mehrere Hohlbehälter umfasst, der/die mit einer losen Schüttung aus granulatartigem Ballastmaterial variabler Menge befüllt ist/sind.

10. Vorrichtung nach einem der Ansprüche 1 bis 9, bei der sich die Trennstelle (34) in einem Bereich der Hubwerksäule (18) befindet, der maximal deren halber Gesamthöhe entspricht.

11. Verfahren zur Überführung und/oder zum Umbau einer Palettier- Stapel- und/oder Handhabungsvorrichtung (10) mit einem Hubwerk (14) und einer daran angeordneten und zumindest in vertikaler Richtung verstellbaren Handhabungseinrichtung (16), Auflage- und/oder Transportebene, Greifeinrichtung o. dgl. für Transportgüter, die entlang einer sich annähernd vertikal erstreckenden Hubwerksäule (18) beweglich ist, zwischen einer Betriebslage (24), in welcher die Hubwerksäule (18) durch wenigstens zwei in vertikaler Längserstreckungsrichtung aneinander gefügte und weitgehend fluchtend aneinander fixierte Säulenabschnitte (20, 22) gebildet ist, und einer Transportlage (32), in welcher der obere Säulenabschnitt (22) über eine zwischen den Säulenabschnitten (20, 22) befindliche Trennstelle (34) in eine gegenüber dem unteren Säulenabschnitt (20) abgewinkelte Lage gebracht ist, bei welchem Verfahren die Handhabungseinrichtung (16) zur Herstellung der Transportlage (32) der Vorrichtung (10) bzw. des Hubwerks (14) von einem in der Betriebslage (24) mit der Handhabungseinrichtung (16) gekoppelten und entlang der Hubwerksäule (18) in vertikaler Richtung und gegensinnig zur vertikalen Bewegung der Handhabungseinrichtung (16) beweglichen Gegengewicht (48) getrennt wird.

## Claims

1. A palletising, stacking and/or handling apparatus (10) with a lifting mechanism (14) and, arranged thereat and adjustable at least in a vertical direction, a handling device (16), a support surface and/or a transport surface, a gripping device, or the like, for transport goods, which handling device (16) is movable along an approximately vertically extending lifting column (18), which lifting column (18) has at least two column sections (20, 22), which are joined together and fixable to one another in the direction of vertical longitudinal extension and at a parting line (34), the lower column section (20) of which is anchored to a base section or pedestal section (26) of the palletising apparatus (10), which base section or pedestal section (26) stands on and/or is fixed on a firm underlayer (28), in which the at least two column sections (20, 22) of the lifting column (18) are fixed to one another largely in alignment with each other when in an operating position (24), and in which the upper column section (22) is brought into an angled position in relation to the lower column section (20) by way of the parting line (34) located between the column sections (20, 22) when in a transport position (32), **characterised in that** the handling device (16), in the transport position (32) of the apparatus (10) or of the lifting mechanism (14), as the case may be, is separated from a counterbalance (48), which, in the operating position, is coupled with the handling device (16) and which is movable along the lifting column (18) in vertical direction and in the direction opposite to the vertical movement of the handling device (16).

2. The apparatus as recited in claim 1, in which the counterbalance (48) is placed in the area of the lower column section (20) below the parting line (34) and/or is fixable there largely without play.

3. The apparatus as recited in one of the claims 1 to 2, in which the handling device (16) and the counterbalance (48) decoupled from it are each lowered into a bottom-most lifting position or onto a bottom movement stop means in the transport position (32) of the apparatus (10) or of the lifting mechanism (14), as the case may be.

4. The apparatus as recited in claim 1 to 3, in which the handling device (16) and the counterbalance (48) are each assigned to the lower column section (20) in the transport position (32) of the apparatus (10) or of the lifting mechanism (14), as the case may be.

5. The apparatus as recited in one of the claims 1 to 4, in which the parting line (34) joining the lower to the upper column section (20, 22) is formed by a hinge joint (36) about which the upper column section (22) is pivotable into an angled position in relation to the vertical lower column section (20).

6. The apparatus as recited in one of the claims 1 to 5, in which the upper column section (22), when in the transport position (32), is angled into a direction, in which it is at least partially deposited above the handling device (16) of the lifting mechanism (14).

7. The apparatus as recited in one of the claims 1 to 6, in which the upper column section (22), which is angled in the transport position (32), is deposited at an angle between 60 and 120 degrees in relation to the vertical and in relation to the lower column section (20).

8. The apparatus as recited in one of the claims 1 to 7, in which a line strand (66) with electrical and/or fluidic control lines and/or supply lines runs along the separable and/or foldable lifting column (18), which line strand (66) is flexible at least in the area of the parting line (34) and remains unseparated both in the operating position (24) and in the transport position (32) of the apparatus (10).

9. The apparatus as recited in one of the claims 1 to 8, in which the counterbalance (48) comprises one hollow vessel or a plurality of hollow vessels, which is/are filled with a loose bulk filling of a variable amount of granular ballast material.

10. The apparatus as recited in one of the claims 1 to 9, in which the parting line (34) is located in an area of the lifting column (18) corresponding to maximally half of its total height.

11. A method for converting and/or modifying a palletising, stacking and/or handling apparatus (10) with a lifting mechanism (14) and, arranged thereat and adjustable at least in a vertical direction, a handling device (16), a support surface and/or a transport surface, a gripping device, or the like, for transport goods, which handling device (16) is movable along an approximately vertically extending lifting column (18) between an operating position (24), in which the lifting column (18) is formed by at least two column sections (20, 22), which are joined together in the direction of vertical longitudinal extension and fixed to one another largely in alignment with each other, and a transport position (32), in which the upper column section (22) is brought into an angled position in relation to the lower column section (20) by way of a parting line (34) located between the column sections (20, 22), in which method the handling device (16), in order to produce the transport position (32) of the apparatus (10) or of the lifting mechanism (14), as the case may be, is separated from a counterbalance (48), which, in the operating position (24), is coupled with the handling device (16) and which is movable along the lifting column (18) in vertical direction and in the direction opposite to the vertical movement of the handling device (16).

## Revendications

1. Dispositif de palettisation, d'empilage et/ou de manipulation (10) comprenant un mécanisme de levage (14) et un dispositif de manipulation (16) disposé sur celui-ci et réglable au moins dans la direction verticale, un plan d'appui et/ou de transport, un dispositif de préhension ou similaire pour des marchandises à transporter qui est déplaçable le long d'une colonne de mécanisme de levage (18) s'étendant approximativement verticalement, ladite colonne de mécanisme de levage (18) comprend au moins deux sections de colonne (20, 22) qui sont jointes l'une à l'autre dans la direction verticale d'extension longitudinale et sur un point de séparation (34) et sont aptes à être fixées l'une sur l'autre et dont la section de colonne (20) inférieure est ancrée sur une section de base ou d'embase (26) du dispositif de palettisation (10) laquelle est posée et/ou fixée sur une base (28) fixe, dans lequel, dans une position de fonctionnement (24), lesdites au moins deux sections de colonne (20, 22) de la colonne de mécanisme de levage (18) sont fixées l'une sur l'autre de manière à être dans une large mesure alignées, et dans lequel, dans une position de transport (32), la section de colonne (22) supérieure est amenée, par l'intermédiaire du point de séparation (34) situé entre les sections de colonne (20, 22), dans une position coudée par rapport à la section de colonne (20) inférieure, **caractérisé par le fait que**, dans la position de transport (32) du dispositif (10) ou bien du mécanisme de levage (14), le dispositif de manipulation (16) est séparé d'un contrepoids (48) qui, en position de fonctionnement, est accouplé au dispositif de manipulation (16) et qui est déplaçable le long de la colonne de mécanisme de levage (18) dans la direction verticale et en sens opposé au mouvement vertical du dispositif de manipulation (16).

2. Dispositif selon la revendication 1, dans lequel ledit contrepoids (48) est situé au niveau de la section de colonne (20) inférieure au-dessous du point de séparation (34) et/ou peut y être fixé dans une large mesure sans jeu.

3. Dispositif selon l'une quelconque des revendications 1 à 2, dans lequel, dans la position de transport (32) du dispositif (10) ou bien du mécanisme de levage (14), le dispositif de manipulation (16) et le contrepoids (48) désaccouplé de celui-ci sont abaissés chacun dans une position de levage la plus basse ou sur une butée inférieure de mouvement.

4. Dispositif selon l'une quelconque des revendications 1 à 3, dans lequel, dans la position de transport du dispositif (10) ou bien du mécanisme de levage (14), le dispositif de manipulation (16) et le contrepoids (48) sont associés chacun à la section de colonne (20) inférieure.

5. Dispositif selon l'une quelconque des revendications 1 à 4, dans lequel le point de séparation (34) reliant entre elles les sections de colonne inférieure et supérieure (20, 22) est formé par une articulation à charnière (36) autour de laquelle la section de colonne (22) supérieure peut pivoter dans une position coudée par rapport à la section de colonne (20) inférieure verticale.

6. Dispositif selon l'une quelconque des revendications 1 à 5, dans lequel, dans la position de transport (32), la section de colonne (22) supérieure est coudée dans une direction dans laquelle elle est déposée au moins en partie au-dessus du dispositif de manipulation (16) du mécanisme de levage (14).

7. Dispositif selon l'une quelconque des revendications 1 à 6, dans lequel la section de colonne (22) supérieure coudée en position de transport (32) est déposée à un angle compris entre 60 et 120 degrés par rapport à la verticale et à la section de colonne (20) inférieure.

8. Dispositif selon l'une quelconque des revendications 1 à 7, dans lequel un faisceau de lignes/conduites (66) flexible au moins au niveau du point de séparation (34) et ayant des lignes/conduites de commande et/ou d'alimentation électriques et/ou fluidiques qui reste inséparé aussi bien dans la position de fonctionnement (24) que dans la position de transport (32) du dispositif (10) s'étend le long de la colonne de mécanisme de levage (18) apte à être séparée et/ou rabattue.

9. Dispositif selon l'une quelconque des revendications 1 à 8, dans lequel le contrepoids (48) comprend un ou plusieurs récipient(s) creux qui est/sont rempli(s) d'une charge en vrac se composant d'une matière de lest de type granulés de quantité variable.

10. Dispositif selon l'une quelconque des revendications 1 à 9, dans lequel le point de séparation (34) est situé dans une zone de la colonne de mécanisme de levage (18), qui correspond au maximum à la demi-hauteur totale de celle-ci.

11. Procédé pour faire passer et/ou transformer un dispositif de palettisation, d'empilage et/ou de manipulation (10) comprenant un mécanisme de levage (14) et un dispositif de manipulation (16) disposé sur celui-ci et réglable au moins dans la direction verticale, un plan d'appui et/ou de transport, un dispositif de préhension ou similaire pour des marchandises à transporter qui est déplaçable le long d'une colonne de mécanisme de levage (18) s'étendant approximativement verticalement, entre une position de fonctionnement (24) dans laquelle la colonne de mécanisme de levage (18) est formée par au moins deux sections de colonne (20, 22) qui sont jointes l'une à l'autre dans la direction verticale d'extension longitudinale et sont fixées l'une sur l'autre de manière à être dans une large mesure alignées, et une position de transport (32) dans laquelle la section de colonne (22) supérieure est amenée, par l'intermédiaire d'un point de séparation (34) situé entre les sections de colonne (20, 22), dans une position coudée par rapport à la section de colonne (20) inférieure, procédé dans lequel, pour réaliser la position de transport (32) du dispositif (10) ou bien du mécanisme de levage (14), le dispositif de manipulation (16) est séparé d'un contrepoids (48) qui, en position de fonctionnement (24), est accouplé au dispositif de manipulation (16) et qui est déplaçable le long de la colonne de mécanisme de levage (18) dans la direction verticale et en sens opposé au mouvement vertical du dispositif de manipulation (16).
